Europäisches Patentamt

European Patent Office

Office européen des brevets

(19)

(11) Numéro de publication: **0 028 049**
**B1**

# FASCICULE DE BREVET EUROPEEN

(12)

(45) Date de publication du fascicule du brevet: **09.05.84**

(51) Int. Cl.³: **F 16 K 31/48,**
**F 16 K 11/06, C 02 F 1/42**

(21) Numéro de dépôt: **80201008.2**

(22) Date de dépôt: **24.10.80**

(54) Dispositif de commande d'un système de conditionnement d'eau.

(30) Priorité: **30.10.79 US 89450**

(43) Date de publication de la demande:
**06.05.81 Bulletin 81/18**

(45) Mention de la délivrance du brevet:
**09.05.84 Bulletin 84/19**

(84) Etats contractants désignés:
**BE CH DE GB IT LI NL**

(56) Documents cités:
**AU - B - 409 314**
**US - A - 3 199 540**
**US - A - 3 252 578**
**US - A - 3 302 467**
**US - A - 3 616 820**
**US - A - 3 742 768**
**US - A - 3 874 412**

(73) Titulaire: **L.W. FLECKENSTEIN, INC., Société dite**
**20580 Enterprise Avenue**
**Brookfield - Wisconsin 53005 (US)**

(72) Inventeur: **Fleckenstein, Andrew**
**Brookfield**
**Waukesha County Wisconsin (US)**
Inventeur: **Mortl, Michael**
**2308 W. Rochelle Ave. Glendale**
**Milwaukee County Wisconsin (US)**

(74) Mandataire: **Loyer, Bertrand et al,**
**Cabinet Pierre Loyer 18, rue de Mogador**
**F-75009 Paris (FR)**

Courier Press, Leamington Spa, England.

## Description

L'invention se rapporte de façon générale au domaine des systèmes utilisant des résines un vue du conditionnement de l'eau pour fournir de l'eau douce aux installations domestiques ou similaires et concerne principalement les distributeurs et les dispositifs de commande utilisés dans de tels systèmes.

Les dispositifs de commande antérieurs des adoucisseurs d'eau utilisaient des distributeurs de construction rigide, montés également de façon rigide. Le distributeur de saumure était communément entièrement incorporé au corps du distributeur et lorsque l'on désirait sélectionner un distributeur d'adoucisseur d'eau pour un système de conditionnement particulier, ou pour adapter le distributeur à des systèmes de dimensions ou de capacités variables, il était nécessaire d'installer un dispositif distributeur complet de capacité et de dimensions requises sans aucune possibilité de modification ou d'adaptation du distributeur aux systèmes de capacités différentes.

On connaît également un dispositif de commande d'un système de conditionnement d'eau correspondant au préambule de la revendication 1 (US—A—3.616.820).

La présente invention permet de fournir en premier lieu un dispositif distributeur de commande dont la fonction a été améliorée par la création d'un entraînement simplifié du piston et par l'incorporation d'un embrayage à un seul tour pour la commande manuelle du dispositif de régénération. Le mécanisme du distributeur de commande utilisé jusqu'à ce jour était en effet pourvu d'une multiplicité de leviers, de galets et de plaques mobiles en vue de la commande du démarrage du cycle de régénération. A la place d'un tel mécanisme un bras a été prévu sur l'axe commandant l'entraînement du piston, ce bras s'étendant jusqu'à une position où il est sollicité par un doigt prolongeant un rayon d'une roue de commande programmée. Un distributeur de saumure sous forme modulaire est prévu en vue de son assemblage sur le distributeur de l'adoucisseur au moyen duquel le dispositif de commande peut être aisément adapté aux systèmes adoucisseurs de dimensions et de capacités diverses.

La création de modules de distributeurs de saumure et de distributeurs d'adoucisseurs permet ainsi au fournisseur d'assurer aisément la fourniture de dispositifs de commande adaptés à une installation de toute dimension ou encore de mofifier un système existant en fonction des besoins. Les connexions des tuyauteries au distributeur d'adoucisseur incorporant des raccords souples qui permettent aux raccords de fixation rigides des tuyauteries fixés au corps en plastique du distributeur d'avoir un certain débattement en vue de libérer les composants plastiques de toute contrainte excessive.

Ansi le but principal de l'invention est de fournir un dispositif de commande d'un système de conditionnement d'eau incorporant un dispositif de commande par minuterie de fonctionnement simplifié et un corps de distributeur d'adoucisseur fait en matière plastique auquel est associé un module de distributeur de saumure.

L'objet principal de l'invention est un dispositif de commande distributeur d'adoucisseur d'eau pour système de conditionnement d'eau comprenant un module distributeur de saumure séparé, assemblé au distributeur et interchangeable.

Il est connu par le brevet US—A—3.616.820 au nom du même inventeur d'employer un dispositif de commande pour appareil de conditionnement d'eau comportant une minuterie actionnée par un moteur d'entraînement, cette minuterie agissant à intervalles de temps déterminés sur un interrupteur électrique alimentant un deuxième moteur entraînant par une transmission appropriée le piston de commande d'une valve de distribution. Une telle disposition présente l'inconvénient de nécessiter l'emploi de deux moteurs, un premier moteur pour actionner le mécanisme d'horlogerie et un deuxième moteur pour actionner les mécanismes de la valve de distribution. De plus, il est nécessaire que ce deuxième moteur puisse être débrayé pour pouvoir actionner manuellement lesdits mécanismes de la valve de distribution.

L'invention telle qu'elle est caractérisée dans la revendication 1, résout le problème lié à cet inconvénient. Des modes particuliers de réalisation de l'inventin apparaîent dans les revendications dépendantes.

Selon l'invention le dispositif distributeur de ce type est pourvu d'un dispositif de minuterie comprenant un moteur d'entraînement monté de façon rigide et un embrayage à un seul tour pour le fonctionnement manuel d'un cycle de fonctionnement du système de conditionnement d'eau incluant un piston actionné par la minuterie.

Une autre caractéristique de l'invention est un dispositif distributeur de ce type comprenant des reccords procurant une souplesse suffisante en vue d'éviter les contraintes excessives entre les éléments connectés.

Une autre caractéristique de l'invention est un dispositif distributeur de ce type comprenant un distributeur de saumure séparé qui peut être assemblé au corps du dispositif distributeur d'adoucisseur fait d'une matière plastique ou assemblé à un corps métallique d'un distributeur adoucisseur.

Une autre caractéristique de l'invention est un dispositif distributeur de ce type comprenant dans son logement tout l'ensemble des passages et orifices requis en éliminant toute tuyauterie externe.

Le tiroir de ladite valve de distribution doit comporter plusieurs cloisonnements pour définir différents circuits de circulation de l'eau et/ou de la saumure de régénération. Selon la présente invention, les bagues d'étanchéité réalisant ces cloisonnements sont maintenues par des bagues d'espacement constituées de manière connue par le brevet AU—B—409.314.

L'objet et les caractéristiques précédentes ainsi que d'autres caractéristiques et avantages particuliers de l'invention ressortiront de la description suivante fait en référence aux dessins annexés dans lesquels:

La figure 1 est une vue générale d'une partie d'un système de conditionnement d'eau incorporant le dispositif de commande par minuterie et le dispositif distributeur de l'adoucisseur d'eau associé selon l'invention, et représentant la minuterie du côté frontal,

La figure 2 est une vue détaillée à plus grande échelle montrant le mécanisme de commande de la minuterie vu du côté arrière, le couvercle arrière étant retiré et le distributeur de l'adoucisseur disposé au dessous de la minuterie,

La figure 3 est aussi une vue de détail, la minuterie étant représentée en élévation latérale et le distributeur de l'adoucisseur situé en dessus étant aussi en élévation latérale,

La figure 4 est une vue verticale en coupe du dispositif de commande de la minuterie et du distributeur de l'adoucisseur effectuée selon la ligne 4—4 de la figure 1,

La figure 5 est une vue éclatée représentant les parties du distributeur de l'adoucisseur,

La figure 6 est une vue de détail en coupe du distributeur de l'adoucisseur effectuée selon la ligne 6—6 de la figure 3 et représentant sa relation par rapport au dispositif de commande de la minuterie,

La figure 7 est aussi une vue de détail en coupe du distributeur de l'adoucisseur effectuée selon la ligne 7—7 de la figure 6,

La figure 8 est une vue en plan du distributeur de l'adoucisseur à partir de la ligne 8—8 de la figure 3,

La figure 9 est une vue de détail en élévation de l'installation du distributeur de l'adoucisseur comprise entre le dispositif de commande de minuterie et le réservoir de traitement minéral,

La figure 10 est une vue fragmentaire d'un détail du mécanisme de la minuterie dont une partie a été arrachée pour montrer l'engagement d'un ergot à l'arrière du cadran horaire avec un ergot de la roue programmée de commande du démarrage d'un cycle de régénération,

La figure 11 est une vue en coupe effectuée le long de la ligne 11—11 de la figure 10 représentant les détails de l'engagement illustré sur cette figure et,

La figure 12 une vue en coupe horizontale du distributeur de l'adoucisseur effectuée le long de la ligne 12—12 de la figure 4 représentant un détail de la structure des bagues d'espacement du distributeur.

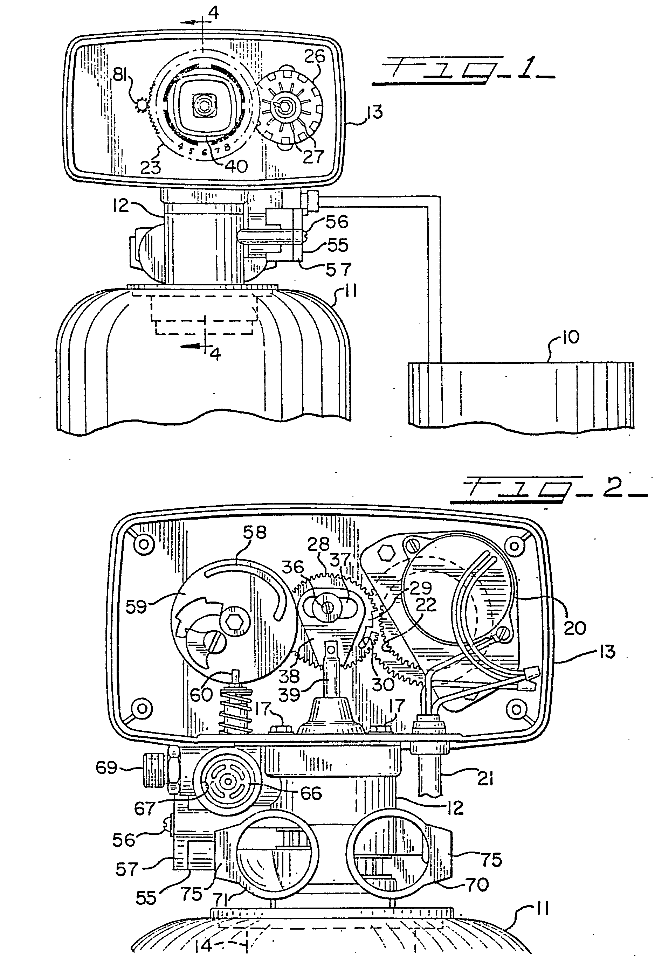

Comme le montre la figure 1 des dessins, l'invention est utilisée dans un système de conditionnement d'eau comprenant un réservoir de saumure 10 et un réservoir de traitement 11 associés à un distributeur d'adoucisseur 12 et à un dispositif de commande par minuterie 13 coopérant entre eux, l'ensemble étant monté au sommet du réservoir de traitement 11. Des connexions appropriées aux canalisations sont prévues pour assurer la circulation requise d'une nouvelle arrivée d'eau dure et d'une solution de saumure traversant le dispositif distributeur de commande tout en assurant la distribution d'eau adoucie au système des canalisations domestiques comme cela est bien connu dans ce domaine.

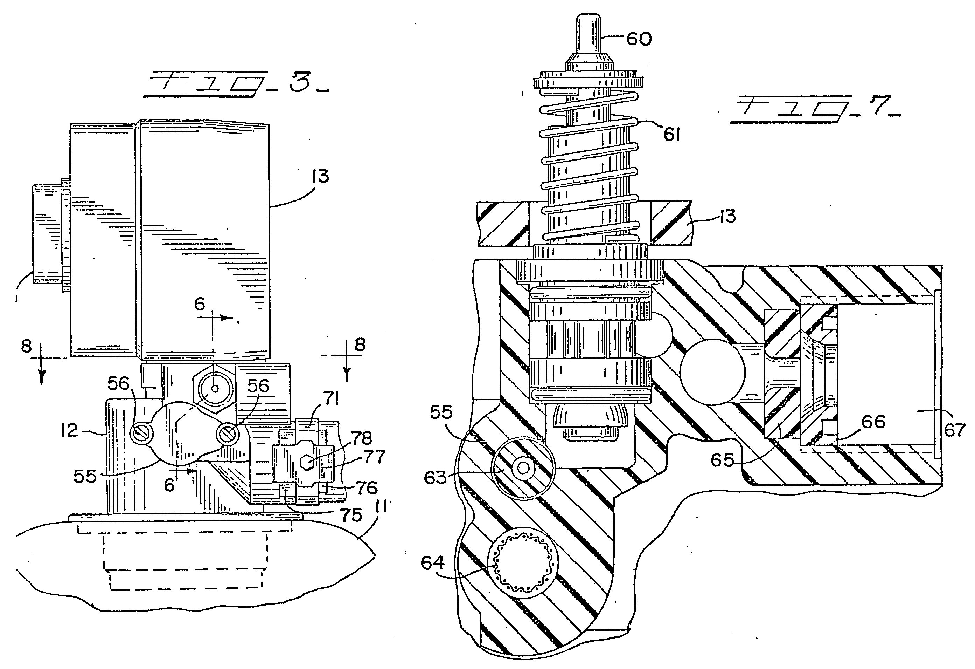

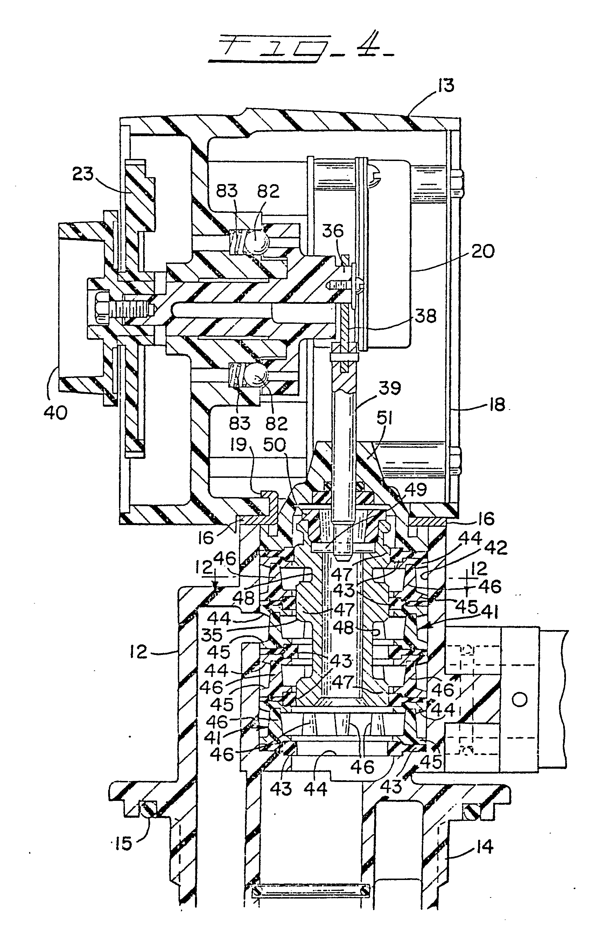

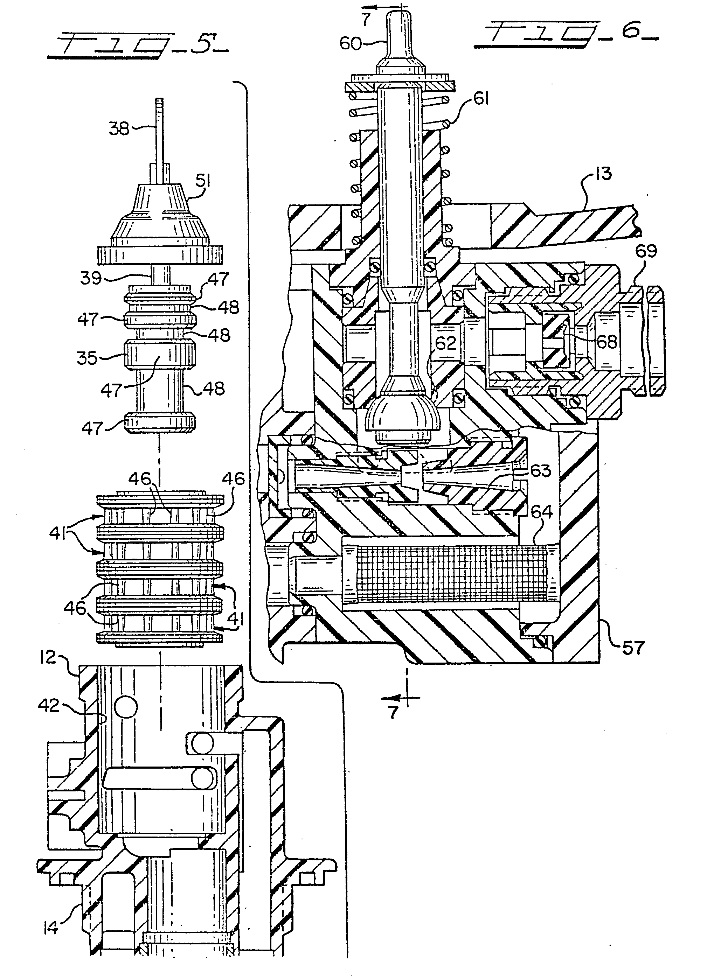

Le dispositif distributeur de l'adoucisseur 12 est fait de préférence d'une matière plastique convenable et inclut un raccord fileté 14 vissé dans un raccord convenable du réservoir de traitement afin de monter le distributeur sur le réservoir 11 en utilisant une garniture d'étanchéité en forme d'anneau torique 15 entre le sommet du réservoir et une bride circulaire sur le corps du distributeur comme le montre plus clairement la figure 4. Le dispositif de commande de minuterie 13 est monté au sommet du distributeur 12 sur une plaque intermédiaire 16 représentée figure 4. Sur le côté arrière du dispositif de commande 13 elle est fixée au moyen de deux boulons à tête d'écrou 17 qui traversent la paroi de fond du dispositif de commande par minuterie et la plaque 16 pour se visser dans le corps du distributeur 12 de l'adoucisseur.

Les boulons 17 sont accessibles lorsque la plaque métallique 18 du couvercle arrière du logement de la minuterie est retirée, mais lorsque le logement 13 de la minuterie est monté sur le distributeur de l'adoucisseur 12 le côté frontal devient inaccessible pour la fixation de ce côté du logement.

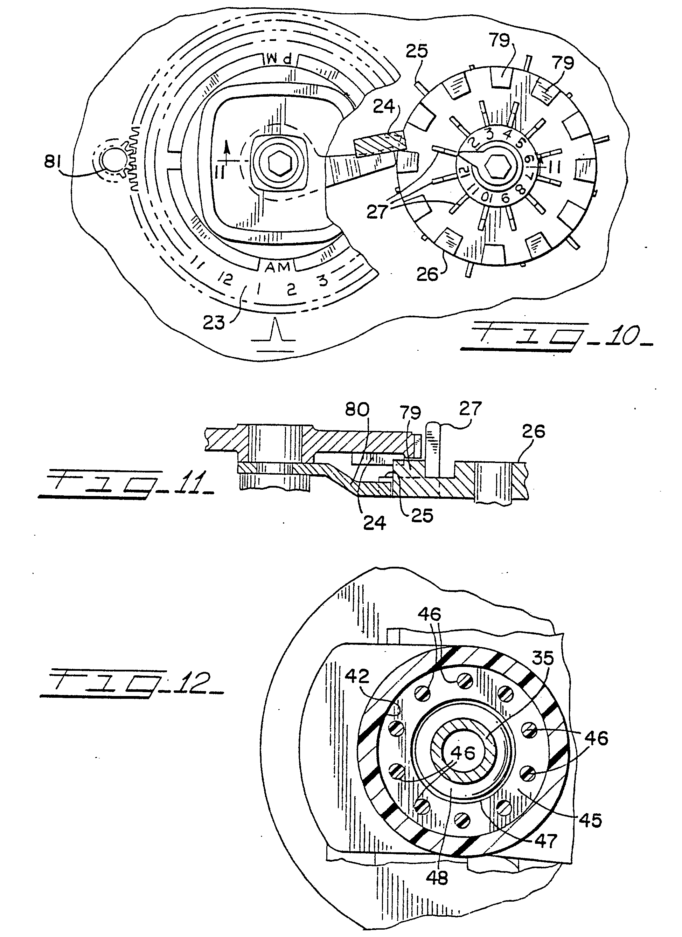

C'est pour cette raison que la plaque intermédiaire 16 a été prévue avec une saillie en forme de crochet 19 et dirigée vers le haut afin de recouvrir le fond de la paroi du logement 13 de la minuterie et de fixer ainsi ce côté au logement du distributeur 12. La plaque 16 est fixée au logement de la minuterie du côté frontal par des goujons prisonniers 31 (voir figure 8) vissés dans le logement 13 et installés avant l'assemblage du logement de la minuterie sur le distributeur de l'adoucisseur.

Le dispositif de commande par minuterie 13 comprend un moteur électrique 20 monté de façon rigide et commandé à partir du courant d'alimentation par un câble convenable comportant le raccord d'accès 21. Le moteur 20 est un moteur à fonctionnement continu ayant un pignon d'entraînement 81 qui commande la rotation du cadran vingt quatre heures 23. Toutes les vingt quatre leures, généralement aux premières heures de la matinée, un ergot de commande 24, monté sur le côté arrière du cadran 23 est positionné pour entrer en contact avec un ergot d'entraînement 79 porté sur la roue programmée 26 et qui est adaptée pour entraîner les ergots sur trente degrés.

Douze doigts de commande 25 également espacés autour de la roue programmée sont disposés en position avancée ou retirée au moyen d'une pièce 27 faisant corps avec le doigt 25 de telle sorte qu'il n'existe qu'un seul doigt de commande 25 en position avancée pour entrer en contact avec le bras de commande 80. Si l'un des doigts de commande ne se trouve pas en position avencée, le bras 80 ne peut être basculé mais lorsque l'un des doigts de commande 25 est en position avencée, il entre en contact avec le bras de commande 80 pour démarrer un cycle complet de régénération. Lorsque le bras 80 et l'ergot 24 sont actionnés, le pignon denté 28 est amené en position d'engagement avec les pignons d'entraînement pour effectuer le démarrage du cycle de régénération.

On notera que les quatre premières dents du pignon 28 après l'encoche 29 sont en porte à faux comme le montre la partie 30 du dessin, de façon à permettre un certain déplacement radial des dents au cours de l'engagement initial avec le pignon d'entraînement en raison de la différence de vitesse existant entre les deux pignons, mais une fois que l'engagement du pignon est obtenu, le pignon d'entraînement 22 s'engrène sur le pignon 28 et l'entraîne pour démarrer le cycle complet de régénération du dispositif adoucisseur d'eau. Lors de l'achèvement du cycle de régénération le pignon denté 28 arrive à sa position neutre où l'encoche 29 empêche l'engrenement du pignon d'entraînement. Il reste maintenu dans cette position neutre par l'action du ressort 83 et de la bille 82.

Le piston de commande 35 du dispositif distributeur 12 de l'adoucisseur est actionné par la roue dentée 28 et à cet effet le pignon est pourvu d'un ergot 36 excentré dirigé vers l'arrière qui, en tournant avec le pignon, pénètre dans une ouverture 37 en forme d'encoche horizontale d'une tête 38 de forme plate portée par la tige 39 du piston, de sorte que lorsque le pignon 28 tourne, le piston 35 est actionné verticalement dans le corps 12 du distributeur pour contrôler plusieurs passages et orifices normalement utilisés dans le fonctionnement d'un système de conditionnement. Ainsi le piston 35 est seulement actionné lorsque le pignon 28 est commandé par le mécanisme de minuterie décrit.

Cependant, le cycle de régénération peut être commandé manuellement en actionnant le pignon 28 à partir de la face avant du dispositif de commande de minuterie 13 au moyen du bouton de commande manuelle 40. Ceci a pour effet de faire tourner immédiatement le pignon 28 et d'agir ainsi sur le piston 35 de commande. Le pignon d'entraînement 22 comporte un embrayage à commande d'un seul tour (non représenté) qui permet au pignon 28 d'être entraîné manuellement sans affecter le fonctionnement normal du moteur 20 ni le mécanisme d'entraînement, de sorte que la régénération manuelle peut être effectuée sans aucun effet sur le fonctionnement normal du dispositif qui peut donc continuer à opérer automatiquement en fonction du mécanisme de commande 13 de la minuterie lorsque l'opération manuelle est achevée.

Le piston 35 entre en action dans le logement 12 du distributeur par un ensemble de bagues d'espacement 41 empilées dans le logement 12 du distributeur dans l'alésage 42 et séparées par des bagues d'étanchéité 43 disposées entre toutes les bagues 41 ainsi qu'entre ces bagues et la paroi 44 du fond du logement d'une part et la partie supérieure de la chambre formée par l'alésage 42 délimité par la plaque 16. Les bagues d'étanchéité 43 sont formées d'un composé de caouchouc pour se prêter aux pressions requises en vue de comprimer les bagues d'étanchéité en évitant ainsi toute fuite entre les bagues 41 et 43 lorsque les bagues 41 reposent contre les bagues d'étanchéité. Les bagues 43 peuvent être faites de toute matière synthétique si on le préfère.

On doit noter que les bagues 41 sont formées de deux parties pour la simplicité de la fabrication et comprennent une pièce circulaire supérieure 44 et un fond circulaire 45, les bagues 41 comprenant un ensemble de petits montants solidaires 45, également répartis autour de la pièce et s'engageant avec la partie inférieure de la pièce supérieure 44 au moyen d'un ajustage à déclic de sorte qu'après fabrication en articles détachés ils peuvent être assemblés puis soumis à un traitement thermique pour constituer par leur liaison un assemblage annulaire unitaire que l'on insère dans l'alésage 42 alternativement avec les bagues d'étanchéité 43. Les bagues 41 sont faites d'une matière plastique convenable à la fois pour une économie de fabrication et pour un assemblage plus aisé des deux parties qui les constituent.

Le logement entier 13 du dispositif distributeur de l'adoucisseur est fait aussi d'une matière plastique convenable mais le piston 35, qui est creux, est constitué d'un métal, tel que le bronze, et est pourvu d'un ensemble de plages 47 et de canaux 48 compris entre ces plages pour introduire une communication entre les divers orifices du distributeur de l'adoucisseur lorsque le piston est déplacé verticalement entre ses positions de commande au cours d'une opération normale. Le piston est connecté à la barre ou à la tige 39 au moyen d'un tenon métallique 49 contre lequel une pièce de fixation creuse 50 prend appui lorsqu'elle est vissée à l'extrémité supérieure du piston.

Ainsi le piston est ouvert à la fois aux extrémités supérieure et inférieure afin d'assurer la circulation de l'eau selon les opérations effectuées par le dispositif. La pièce 50 est en plastique, la tige 39 en métal et le plaquette de tête 38 en métal, le moteur étant naturellement un moteur usuel, mais la majorité des pièces du distributeur de l'adoucisseur 12, le dispositif de commande de minuterie 13, y compris les divers pignons d'entraînement sont faits de matières plastiques. La pièce de couvercle supérieur 51 obturant la partie supérieure de la chambre du piston est aussi fait d'une matière plastique et empêche tout échappement de l'eau cirlant à l'intérieur et autour du piston 35.

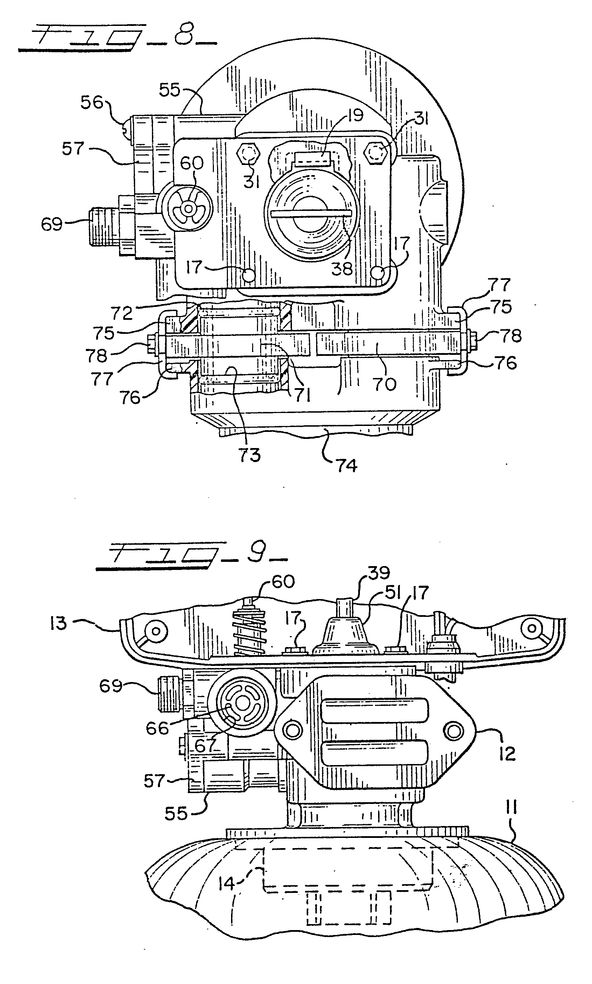

Une caractéristique important de l'ensemble 12 du distributeur de l'adoucisseur est la prévision d'un module distributeur de saumure séparé 55, assemblé au logement du distributeur 12, et fixé au moyen de deux écrous 56 qui assurent aussi la fixation de la plaque 47 du couvercle de l'injecteur du corps 55. Le distributeur de saumure comprend un injecteur actionné par une came 58 d'une roue 59 située dans la logement du dispositif de commande 13 et qui est entraînée en rotation par le pignon 28. Lorsque la roue 59 est entraînée par le pignon 28, la came 58 actionne le distributeur de saumure 55. Elle atteint ainsi une position qui entraîne l'enfoncement du distributeur de saumure à l'encontre de la résistance du ressort 61 du distributeur de saumure et écarte ainsi le distributeur de saumure hors de son siège 62 figure 6.

La capacité du distributeur de saumure peut varier pour s'adapter aux systèmes de dimensions et de capacités différentes. Une série interchangeable d'orifices est prévue de façon que leurs ouvertures de dimensions différentes puissent être utilisées avec des orifices sélectionnés d'un système donné pour fournir les débits désirés. Un jeu d'injecteurs 63 interchangeables est prévu afin de s'adapter à la dimension et à la capacité du système dans lequel le distributeur adoucisseur 12 est utilisé. Un filtre d'injecteur 64 est prévu dans cette partie du distributeur de saumure derrière la plaque de couvercle 57. Une pièce interchangeable 65 comportant un orifice est prévue dans le passage 67 étant fixée par un raccord 66 vissé dans le passage 67 et une pièce interchangeable similaire 68 pourvue d'un orifice est prévue dans le circuit de saumure, cette dernière pièce étant fixée dans le raccord 69.

Ainsi, le module du distributeur de saumure 55 peut se présenter sous différents types pour répondre à tout système ayant une capacité donnée pour une installation particulière et de ce fait le dispositif distributeur adoucisseur 12 peut être assemblé pour comporter un distributeur de saumure adaptable en dimensions et en capacité selon le système particulier avec lequel il doit être utilisé. Le distributeur de saumure, actionné par la pièce de commande 58 de la minuterie fonctionne pour contrôler les chemins de circulation des liquides à travers les divers orifices et passages selon les conditions correspondant à un fonctionnement normal du système de conditionnement avec lequel il est associé.

Des pièces de raccordement d'entrée et de sortie des liquides 70 et 71 sont montées de façon élastique sur le distributeur de l'adoucisseur en vue de leur connexion au système de tuyauterie domestique sans avoir à faire supporter des efforts ou des contraintes excessives à la structure plastique du logement 12. Ces pièces de raccordement 70 et 71, mieux représentées figure 8 sont adjustées dans les ouvertures d'entrée et de sortie du corps du distributeur 12 et chaque raccord comprend un joint torique 72 autour de la partie s'étendant dans le corps du distributeur et qui non seulement agit comme un joint mais permet un certain mouvement par la flexibilité du raccordement au corps du distributeur. Un joint torique similaire 73 est placé autour de chaque pièce de raccordement 70—71 sur leur partie adjacente à leur partie tournée vers l'extérieur et ces joints procurent aussi à la fois l'étanchéité et la souplesse recherchées pour le raccord d'alimentation 74 qui comporte un ajustage glissant autour des pièces de raccordement 70 et 71 au delà des joints toriques 73.

Ainsi les pièces de raccordement 70 et 71 ont une certaine possibilité de déplacement relatif par rapport au corps du distributeur 12 et par rapport au raccord d'alimentation 74, cette flexibilité étant maintenue par le moyen de fixation utilisé pour maintenir le raccord d'alimentation en position de fonctionnement sur les parties fixes 70 et 71, ces derniers s'ajustant en position de fonctionnement par rapport à leur monture dans le corps de plastique du distributeur 12. Le corps du dispositif distributeur comporte un prolongement 75 sur chacun de des côtés et le raccord d'alimentation comporte des prolongements latéraux similaires 76, ces prolongements constituant des moyens de maintien en aligement des pièces de raccordement 70 et 71 et du raccord d'alimentation 74 avec les orifices d'entrée et de sortie du corps du distributeur 12 tout en permettant la souplesse d'un certain déplacement grâce aux joints toriques 72 et 73. Une pièce de serrage 77 de chaque côté maintient les raccords en position de fonctionnement sans courber ou exercer quelque contrainte sur ces pièces. Les pièces de serrage 77 sont fixées chacune aux pièces de raccordement 70 ou 71 selon le cas par un petit boulon ou une vis 78.

On voit d'après ce qui précède que l'on réalise de la sorte un dispositif distributeur d'adoucisseur adaptable de façon universelle à un système de conditionnement d'eau dont le distributeur peut être aisément modifié ou réglé pour répondre aux capacités de tout système de conditionnement d'eau et pour fonctionner avec un dispositif de commande d'opérations d'une minuterie associée, actionnant le distributeur de l'adoucisseur et le distributeur de saumure associé, la plus grande partie des pièces des distributeurs et du dispositif de minuterie étant faite de matières plastiques, un dispositif de raccordement souple étant prévu pour connecter les tuyauteries domestiques existantes de façon à éviter tout dommage ainsi que tout effort excessif aux pièces en plastique.

Le dispositif distributeur de l'adoucisseur comporte donc un distributeur de saumure séparé et assemblé avec lui et qui est fait de matières plastiques mais qui peut aussi être assemblé aussi bien avec un corps de distributeur d'adoucisseur en plastique ou en métal en cuivre ou en bronze par exemple. Le dispositif distributeur de l'adoucisseur après assemblage, comprend des passages et orifices internes nécessaires au fonctionnement du système de conditionnement d'eau dans lequel toute tuyauterie externe est éliminée. Le dispositif de commande de la minuterie simplifie le fonctionnement du conditionnement d'eau en éliminant les multiples pièces qui étaient utilisées jusqu'ici pour effectuer le démarrage d'un cycle de régénération et procure des commandes directes au moyen du moteur d'entraînement monté de façon fixe. Ainsi ces perfectionnements simplifient le fonctionnement des systèmes de conditionnement d'eau du type envisagé.

**Revendications**

1. Dispositif de commande d'un système de conditionnement d'eau du type comportant: une minuterie (13); un distributeur d'adoucisseur (12) connecté à un réservoir de traitement (11) et à un réservoir de saumure (10), ledit distributeur d'adoucisseur (12) comprenant des raccordements de tuyauterie pour l'alimentation en eau, pour l'adjonction de saumure et pour la distribution d'eau adoucie; un moteur (20) entraînant le piston (35) du distributeur d'adoucisseur (12), ainsi que ladite minuterie (13), une roue programmée (26) de la minuterie et une liaison de commande entre le moteur d'entraînement (20) et la roue programmée (26) pour provoquer le fonctionnement du dit distributeur (12), lequel comporte un distributeur de saumure (55) incorporant un injecteur (63) et une vanne d'admission (62) de saumure; ledit distributeur d'adoucisseur (12) étant pourvu d'un ensemble de bagues d'espacement (41) et dudit piston (35) agissant sur lesdites bagues (41), caractérisé par le fait que ledit moteur (20) est monté de façon fixe et rigide; que ledit distributeur de saumure (55) se présente sous la forme d'un module interchangeable assemblé audit distributeur d'adoucisseur; que lesdites bagues d'espacement (41) étant en matière plastique et réalisées en deux parties comprenant des éléments supérieur (44) et inférieur (45) séparés par un ensemble de petits montants (46) faisant corps avec l'un de ces éléments et étant fixés par un traitement thermique à l'autre élément, des bagues d'étanchéité (43) étant placées entre les bagues d'espacement adjacentes.

2. Dispositif tel que revendiqué en 1 dont le distributeur d'adoucisseur (12) et le distributeur de saumure (55) comportant après assemblage l'ensemble des orifices et les passages d'eau requis pour le fonctionnement du dispositif.

3. Dispositif tel que revendiqué en 1 dont le distributeur d'adoucisseur (12) est construit de façon substantielle à partir de matières plastiques et comprend des ouvertures d'entrée et de sortie d'eau, et un dispositif de raccordement plastique (70—71) dans chacune desdites ouvertures pour être reliées à des canalisations rigides, lesdits dispositifs de raccordement comprenant des moyens (72) permettant de connecter lesdites canalisations de façon souple afin d'éviter tout dommage à la structure plastique du distributeur.

4. Dispositif tel que revendiqué en 3, dont lesdits moyens assurant la souplesse du raccordement (70—71) comprennent chacun un joint torique (72—73) entre chacun des dispositifs de raccordement et lesdites ouvertures d'entrée et de sortie, ainsi qu'un joint torique entre chacun desdits dispositifs de raccordement (70—71) et lesdites canalisations.

5. Dispositif tel que revendiqué en 1 dont le distributeur (12) de l'adoucisseur inclut un orifice interchangeable pour adapter le distributeur (12) et le module distributeur de saumure (55) à des installations de différentes capacités.

6. Dispositif tel que revendiqué en 5 dont ledit module distributeur de saumure (55) comporte aussi un orifice interchangeable.

7. Dispositif tel que revendiqué en 6 dont le module distributeur de saumure (55) comprend aussi un ajutage d'injecteur interchangeable.

**Patentansprüche**

1. Vorrichtung zur Steuerung eines Systems zur Wasseraufbereitung eines Typs mit: Zeituhr (13), Verteiler des Wasserenthärters (12) verbunden mit einem Behälter für die Aufarbeitung (11) und einem Behälter für Brackwasser (10), wobei dieser Verteiler des Wasserenthärters (12) Rohrleitungsanschlüsse zur Versorgung mit Wasser zum Anschluss des Brackwassers und zur Verteilung des enthärteten Wassers aufweist; Antriebsmotor (20) des Kolbens (35) des Verteilers des Wasserenthärters (12) sowie die besagte Zeituhr (13), ein programmiertes Rad (26) der Zeituhr und eine Steuerverbindung zwischen dem Antriebsmotor (20) und dem programmierten Rad (26) zur Auslösung des Betriebs dieses Verteilers (13), mit einem Verteiler für Brackwasser (55) mit einer Einspritzvorrichtung (63) und einem Einlaufventil (62) für Brackwasser, wobei dieser Verteiler des Wasserenthärters (12) mit einer Serie von Abstandsringen (41) und einem Kolben (35) versehen ist, der auf diese Ringe (41) einwirkt, dadurch gekennzeichnet, dass dieser Motor (20) fest und steif montiert ist und dass dieser Verteiler für Brackwasser (55) die Form eines austauschbaren Bauteils aufweist, das mit diesem Verteiler des Wasserenthärters verbunden ist; dass diese Abstandsringe (41) aus Kunststoff bestehen und in zwei Teilen hergestellt sind, die obere (44) und untere Bauteile (45) aufweisen, die durch eine Reihe von kleinen Stützen (46) voneinander getrennt sind, die mit dem einen dieser Bauteile fest verbunden sind und an dem anderen durch eine Wärmebehandlung befestigt sind, wobei Dichtungsringe (43) zwischen den danebenliegenden Abstandsringen eingesetzt sind.

2. Vorrichtung nach Anspruch 1, dadurch gekennzeichnet, dass der Verteiler des Wasserenthärters (12) und der Verteiler für Brackwasser (55) nach dem Zusammenbau sämtliche Öffungen und Wasserdurchgänge aufweisen, die für den richtigen Betrieb der Vorrichtung erforderlich sind.

3. Vorrichtung nach Anspruch 1, dadurch gekennzeichnet, dass der Verteiler des Wasserenthärters (12) im wesentlichen mit Hilfe von Kunststoffen hergestellt ist und Eingangs- und Ausgangs-Öffnungen für Wasser aufweist, und eine Vorrichtung für einen plastischen Anschluss (70—71) in jeder dieser Öffnungen zum Anschluss an steife Rohrleitungen, wobei diese Anschlussvorrichtungen Mittel aufweisen (72), die einen Anschluss dieser Rohrleitungen auf eine geschmeidige Art und Weise ermöglichen, um jeden Schaden an der Kunststoffstruktur des Verteilers zu vermeiden.

4. Vorrichtung nach Anspruch 3, dadurch gekennzeichnet, dass diese Mittel die Anschmiegbarkeit des Anschlusses (70—71) gewährleisten und jeweils einen Torusring (72—73) zwischen jeder der Anschlussvorrichtungen und diesen Eingangs- und Ausgangs-Öffnungen sowie einen Torusring zwischen jeder dieser Anschlussvorrichtungen (70—71) und diesen Rohrleitungen aufweisen.

5. Vorrichtung nach Anspruch 1, dadurch gekennzeichnet, dass der Verteiler (12) des Wasserenthärters eine austauschbare Öffnung besitzt, die es ermöglicht, den Verteiler (12) und das Beuteil zur Verteilung des Brackwasser (55) an Anlagen unterschiedlicher Kapazitäten anzuschliessen.

6. Vorrichtung nach Anspruch 5, dadurch gekennzeichnet, dass dieses Bauteil zur Verteilung von Brackwasser (55) ebenfalls eine austauschbare Öffnung aufweist.

7. Vorrichtung nach Anspruch 6, dadurch gekennzeichnet, dass das Bauteil zur Verteilung von Brackwasser (55) ebenfalls ein austauschbares Regelrohr für die Einspritzvorrichtung aufweist.

**Claims**

1. Water treatment system control device of the type including: a timer (13); a softener selector valve (12) connected to a treatment tank (11) and a brine tank (10), the said softener selector valve (12) including pipe connections for supplying water, for the injection of brine and for the distribution of softened water; a motor (20) driving the piston (35) of the softener selector valve (12), in addition to the said timer (13), a programming wheel (26) of the timer and a control link between the drive motor (20) and the programming wheel (26) to operate the said selector valve (12), which includes a brine selector valve (55) including an injector (63) and an inlet valve (62) for brine; the said softener selector valve (12) being provided with a set of spacing rings (41) and the said piston (35) acting on the said rings (41), characterized by the fact that the said motor (20) is installed in a permanent and rigid manner; that the said brine selector valve (55) is in the form of an interchangeable module mounted on the said softener selector valve; that the said spacing rings (41) are of plastic and consist of two parts including upper (44) and lower (45) parts separated by a set of small projections (46) which are integral with one of the parts and fixed by heat treatment to the other part, sealing rings (43) being placed between the adjacent spacing rings.

2. Device corresponding to claim 1 of which the softener selector valve (12) and the brine selector valve (55) include after assembly all the water passages and ports required for operation of the device.

3. Device corresponding to claim 1 of which the softener selector valve (12) is substantially constructed of plastic material and includes water inlet and outlet opening, and a plastic connection device (70—71) in each of the said openings for connection to rigid lines, the said connection devices including means (72) of connecting the said pipe in a flexible manner so as to avoid damaging the plastic selector valve structure.

4. Device corresponding to claim 3 for which the said means providing coupling flexibility (70—71) each include an O-ring (72—73) between each of the connection devices and the said inlet and outlet openings, as well as an O-ring between each of the said coupling devices (70—71) and the said pipes.

5. Device corresponding to claim 1 for which selector (12) of the softener includes an interchangeable port for adapting the selector valve (12) and the brine selector valve module (55) to installations of different capacities.

6. Device corresponding to claim 5 for which the said brine selector valve module (55) also includes an interchangeable port.

7. Device corresponding to claim 6 for which the brine selector valve module (55) also includes an interchangeable injection nozzle.

FIG-1-

FIG-2-

_FIG_3_

13

6

8

8

56

56

71

12

78

55

77

6

76

75    11

_FIG_7_

60

61

13

55

63

64

65

66

67

0 028 049

Fig. 4.

FIG_5_

FIG_6_

_FIG_ 8_

_FIG_ 9_

FIG_10_

FIG_11_

FIG_12_